# EUROPEAN PATENT APPLICATION

(11) **EP 4 773 376 A1**
(43) Date of publication of application: **08.07.2026**
(21) Application number: 25813250.5
(22) Date of filing: 30.06.2025
(51) Int. Cl.: H01M 50/262, H01M 50/569, H01M 50/505, H01M 50/249, H01M 10/42

(54) **BATTERY MODULE, BATTERY PACK, AND VEHICLE**

(30) Priority: 21.10.2024 KR 20240143768
(71) Applicant: LG ENERGY SOLUTION, LTD., Seoul 07335 (KR)
(72) Inventor: JANG, Sunghwan, Yuseong-gu, Daejeon 34122 (KR); KIM, Gwan Woo, Yuseong-gu, Daejeon 34122 (KR); SIN, Jehwan, Yuseong-gu, Daejeon 34122 (KR)
(74) Representative: Plasseraud IP
(86) International application number: PCT/KR2025/009170
(87) International publication number: WO 2026/089193

(57) **Abstract**

The present disclosure provides a battery module including a cell stack in which a plurality of cells are stacked, and a module case that accommodates the cell stack. In the battery module, the module case includes a case body having an opening portion, and an end cover assembly coupled to the opening portion of the case body, and the end cover assembly includes a mounting structure for fixing the battery module to a pack case, and a voltage and current sensing structure including a sensing line directly connected to the plurality of cells.

## Description

### CROSS-REFERENCE TO RELATED APPLICATIONS

This application is a National Phase entry pursuant to 35 U.S.C. 371 of International Application PCT/KR2025/009170 filed June 30, 2025, which claims the benefit of priority based on Korean Patent Application No. 10-2024-0143768 filed on October 21, 2024, the disclosures of which are incorporated herein by reference in their entirety.

### TECHNICAL FIELD

The present disclosure relates to a battery module, a battery pack, and a vehicle, and more specifically, relates to a battery module, a battery pack, and a vehicle, which simplify a configuration and improve convenience of assembly by realizing a structure for mounting and a structure for voltage and current sensing as a single component.

### BACKGROUND

Semi-permanent batteries that can convert electrical energy into chemical energy and may be repeatedly charged and discharged are called secondary batteries.

The secondary batteries include lithium secondary batteries, nickel-cadmium (Ni-Cd) batteries, lead-acid batteries, nickel-metal hydride (Ni-MH) batteries, zinc-air batteries, and alkaline manganese batteries.

Among these batteries, the lead-acid batteries and the lithium secondary batteries are most actively commercialized secondary batteries.

In particular, the lithium secondary batteries have been recently and actively utilized as electric vehicle batteries owing to advantages such as high energy storage density, a lightweight and miniaturized size, excellent safety, a low discharge rate, and a long lifespan.

For reference, the lithium secondary batteries are generally classified into a cylindrical type, a square type, and a pouch type, depending on manufacturing forms, and are widely used not only for the electric vehicle batteries but also for ESS batteries and other electrical devices.

Currently, an operating voltage of a single lithium secondary battery cell is approximately 25 V to 45 V.

Therefore, in order to apply the secondary battery as an energy source for an electric vehicle, battery modules are configured by connecting a plurality of lithium ion battery cells in series and/or in parallel, and a battery pack is configured by connecting the battery modules in series and/or in parallel.

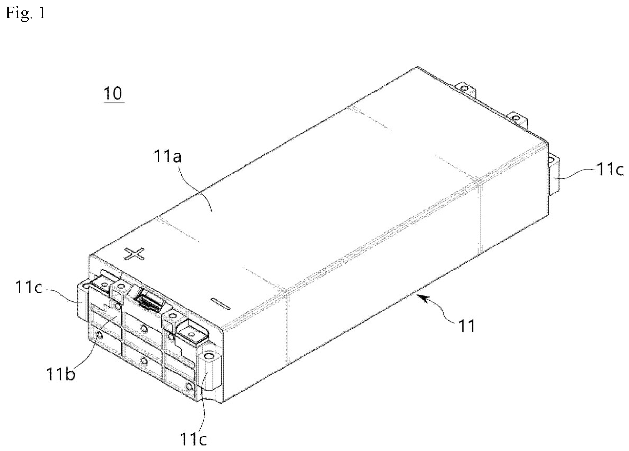

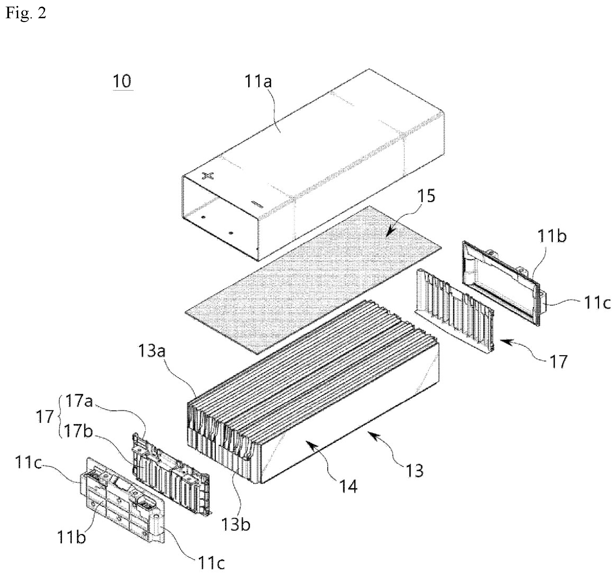

FIG. 1 is a diagram illustrating a battery module in the related art, and FIG. 2 is an exploded view illustrating the battery module in the related art.

A battery module 10 in the related art includes a module case 11, a cell stack 13, a heat transfer blocking sheet 15, and a busbar assembly 17.

The module case 11 is a component to protect the cell stack 13 from an external impact or the like, and is made of a metal material having excellent mechanical strength.

This module case 11 includes a case body 11a and an end cover 11b, and mounting portions 11c for being fixed to a battery pack case are formed on both sides of the end cover 11b.

The battery pack case is a case provided to accommodate a plurality of the battery modules 10 to configure a battery pack.

The cell stack 13 is formed by stacking multiple battery cells 13a to form an approximately hexahedral shape, and electrode leads 13b are extended from both sides of each battery cell 13a in a longitudinal direction.

A reference numeral 14 is a compressible pad, and serves to pressurize an outermost battery cell.

The heat transfer blocking sheet 15 is a component that prevents rapid collapse of the module case 11 due to a high-temperature gas or a flame in a situation where a thermal event occurs inside the battery module 10.

The heat transfer blocking sheet 15 is made of a heat-resistant material, and may be configured to surround at least a portion of the cell stack 13 inside the module case 11.

The busbar assembly 17 includes a busbar frame 17a and multiple busbars 17b as means for connecting the battery cells 13a to each other in series and/or in parallel.

The battery module 10 in the related art configured in this way has the following problems. An overall configuration becomes complicated, and assembly is inconvenient since the mounting portion 11c for being fixed to the battery pack case has to be formed in the end cover 11b, and the busbar assembly 17 for connecting the battery cells 13a to each other in series and/or in parallel has to be separately provided.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

The present disclosure has been made to solve various problems in the related art as described above, and an object of the present disclosure is to provide a battery module, a battery pack, and a vehicle, which simplify a configuration and improve convenience of assembly by realizing a structure for mounting and a structure for voltage and current sensing as a single component.

According to the present disclosure, in order to achieve the above-describe objects, there is provided a battery module including a cell stack in which a plurality of cells are stacked, and a module case that accommodates the cell stack. In the battery module, the module case includes a case body having an opening portion, and an end cover assembly coupled to the opening portion of the case body, and the end cover assembly includes a mounting structure for fixing the battery module to a pack case, and a voltage and current sensing structure including a sensing line directly connected to the plurality of cells.

Fastening brackets extending along a longitudinal direction may be in both end portions of the case body in the longitudinal direction, and the fastening brackets may be fastened to the end cover assembly.

The end cover assembly may include a housing having an internal accommodating space and the mounting structure, and a busbar assembly accommodated in the accommodating space of the housing and having the voltage and current sensing structure.

At least one module mounting portion configured to be fixed to the pack case may be on an outer surface of the housing.

A pair of the module mounting portions may be at a center of a front surface of the housing, and may be fastened with a bolt in a direction perpendicular to a bottom surface of the pack case.

In the housing a bracket mounting portion may be at a position corresponding to the fastening bracket.

The bracket mounting portions may be respectively on both side surfaces of the housing, and the fastening bracket may extend from both end portions of the case body.

A through-hole penetrating upward and downward may be on an upper surface of the housing, a connector may be in the through-hole, the connector may be in the busbar assembly, and the connector may be configured to transmit and receive information of the battery module through a sensing line communicating with the through-hole.

Meanwhile, the present disclosure provides a battery pack including the battery module, and a pack case that accommodates a plurality of the battery modules.

In addition, the present disclosure provides a vehicle including the battery pack.

According to the solution to the above-described problem, the present disclosure has the following advantageous effects.

The present disclosure has an advantageous effect of simplifying a configuration and improving convenience of assembly by forming a mounting structure for fixing a pack case accommodating a plurality of battery modules to an end cover assembly of the battery module, and a voltage and current sensing structure including a sensing line directly connected to the plurality of cells.

In addition, the present disclosure has an advantageous effect of improving rigidity by respectively forming a module mounting portion and a bracket mounting portion in a housing of an end cover assembly, compared to a mounting structure for fixing a battery module to a pack case in the related art.

In addition, the present disclosure has an advantageous effect of simplifying a sensing structure by accommodating a busbar assembly having a voltage and current sensing structure in an accommodating space of a housing and directly connecting an electrode lead of a battery cell and a sensing line, compared to a battery module in the related art.

### BRIEF DESCRIPTION OF THE DRAWINGS

FIG. 1 is a diagram illustrating a battery module in the related art.
FIG. 2 is an exploded view illustrating the battery module in the related art.
FIG. 3 is a diagram illustrating a battery module according to one embodiment of the present disclosure.
FIG. 4 is an exploded view illustrating an end cover assembly in the battery module in FIG. 3.
FIG. 5 is an exploded view of a housing and a busbar assembly of the end cover assembly in the battery module according to one embodiment of the present disclosure.
FIG. 6 is a diagram illustrating a state where the housing and the busbar assembly in FIG. 5 are coupled.
FIG. 7 is a diagram schematically illustrating a vertical cross section of the battery module according to one embodiment of the present disclosure.
FIG. 8 is an enlarged view illustrating a part A in FIG. 7.
FIG. 9 is a diagram schematically illustrating a configuration of a battery pack according to the present disclosure.
FIG. 10 is a diagram schematically illustrating a vehicle including the battery pack in FIG. 9.

### DETAILED DESCRIPTION

Advantages and features of the present disclosure, and methods for achieving the advantages and features of the present disclosure will become apparent by referring to embodiments described below in detail together with the accompanying drawings. However, the present disclosure is not limited to the embodiments disclosed below, and may be realized in various different forms. The present embodiments are provided only to make the disclosure of the present disclosure complete, and to fully address the scope of the disclosure to those skilled in the art to which the present disclosure pertains. The present disclosure is defined only by the appended claims. Therefore, in some embodiments, well-known process steps, well-known device structures, and well-known techniques are not specifically described in order to avoid ambiguity in the interpretation of the present disclosure. The same reference numerals refer to the same elements throughout the specification.

In order to clearly represent multiple layers and regions in the drawings, a thickness may be enlarged. The same reference numerals are assigned to similar elements throughout the specification. When it is described that one element such as a layer, a film, a region, or a plate is located "over" another element, this description includes not only a case where one element is located "directly over" another element, but also a case where still another element is located therebetween. Conversely, when it is described that one element is located "directly over" another element, this description means that no other element is located therebetween. In addition, when it is described that one element such as the layer, the film, the region, or the plate is located "below" another element, this description includes not only a case where one element is located "directly below" another element, but also a case where still another element is located therebetween. Conversely, when it is described that one element is located "directly below" another element, this description means that no other element is located therebetween.

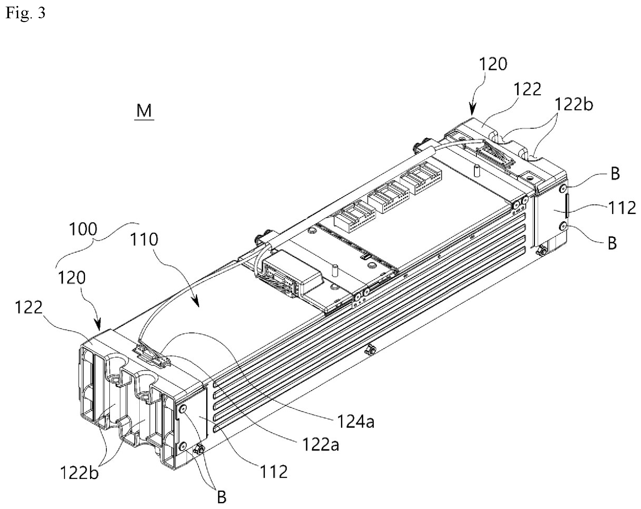

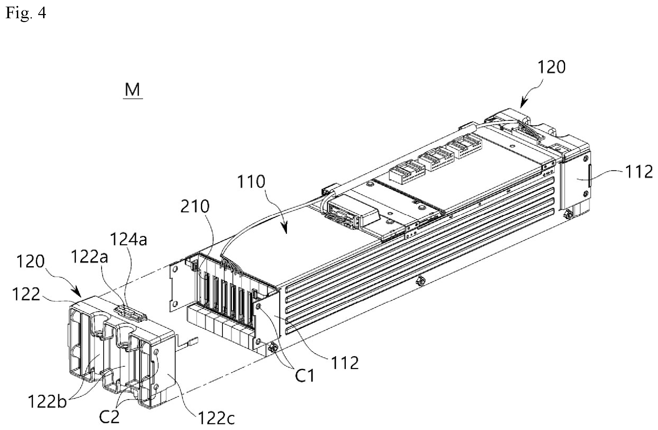

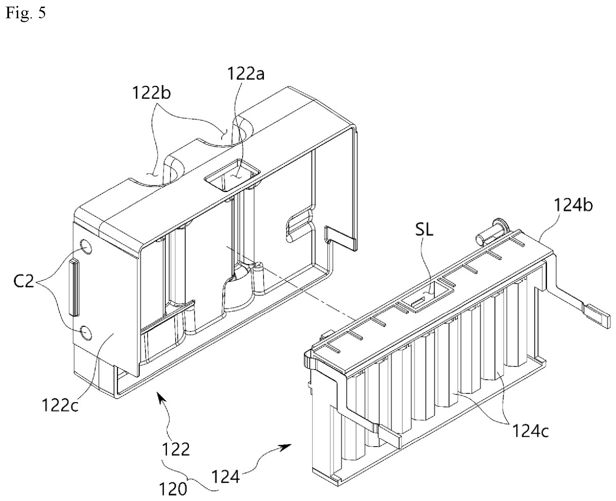

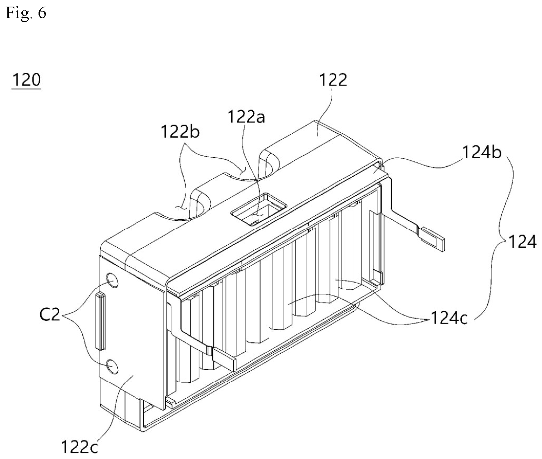

FIG. 3 is a diagram illustrating a battery module according to one embodiment of the present disclosure, FIG. 4 is an exploded view illustrating an end cover assembly in the battery module in FIG. 3, FIG. 5 is an exploded view illustrating a housing and a busbar assembly of the end cover assembly in the battery module according to one embodiment of the present disclosure, and FIG. 6 is a diagram illustrating a state where the housing and the busbar assembly in FIG. 5 are coupled.

A battery module M according to one embodiment of the present disclosure includes a cell stack 200 formed by stacking a plurality of cells, and a module case 100 that accommodates the cell stack 200.

The module case 100 includes a case body 110 having an opening portion, and an end cover assembly 120 coupled to the opening portion of the case body 110.

The case body 110 is open to a front side and a rear side in a longitudinal direction to cover an upper portion, a lower portion, a left side, and a right side of the cell stack 200, and the end cover assembly 120 may be coupled to the opened front side and the opened rear side of the case body 110.

The module case 100 protects the cell stack 200 and electrical components connected thereto from an external physical impact, and may be manufactured by using a metal material having excellent mechanical strength.

The module case 100 accommodates the cell stack 200 and the electrical components connected thereto in an internal space, and the front side and the rear side of the module case 100 have an open form.

The end cover assembly 120 is provided with a mounting structure for fixing the battery module M to a pack case, and a voltage and current sensing structure including a sensing line SL directly connected to a plurality of cells.

The mounting structure includes a module mounting portion 122b and a bracket mounting portion 122c.

The end cover assembly 120 of the battery module M according to one embodiment of the present disclosure has the mounting structure for fixing the battery module M to the pack case, and the voltage and current sensing structure including the sensing line SL directly connected to the plurality of cells. Therefore, the structure is simplified, and convenience of assembly is improved.

The plate-shaped fastening brackets 112 are formed to extend along the longitudinal direction in both end portions of the case body 110 in the longitudinal direction, and the fastening bracket 112 is fastened to the bracket mounting portion 122c formed in the housing 122 of the end cover assembly 120.

Specifically, a plurality of first fastening holes C1 are formed in the fastening bracket 112, and a second fastening hole C2 is formed in the bracket mounting portion 122c to communicate with the first fastening holes C1.

When a bolt B is fitted into and fastened to the second fastening hole C2 through the first fastening hole C1, the fastening bracket 112 is fixed to the bracket mounting portion 122c.

The end cover assembly 120 is integrally formed such that the housing 122 and the busbar assembly 124 are attachable and detachable.

The mounting structure including the module mounting portion 122b and the bracket mounting portion 122c is formed in the housing 122 having the internal accommodating space.

Specifically, at least one module mounting portion 122b for fixing the battery module M to the pack case that accommodates the plurality of battery modules M is formed on an outer surface of the housing 122.

For example, a pair of the module mounting portions 122b may be provided at the center of the front surface of the housing 122, and may be formed to fasten the bolt B in a direction perpendicular to a bottom surface of the pack case.

In the housing 122, the bracket mounting portion 122c is formed at a position corresponding to the fastening bracket 112.

For example, the bracket mounting portions 122c may be respectively formed on both side surfaces of the housing 122, and the fastening bracket 112 may be formed to extend in a plate shape from both end portions of the case body 110.

In this way, the module mounting portion 122b and the bracket mounting portion 122c are respectively formed in the housing 122 of the end cover assembly 120. In this manner, rigidity may be improved, compared to the mounting structure for fixing the battery module to the pack case in the related art.

The busbar assembly 124 is accommodated in the accommodating space of the housing 122, and has the voltage and current sensing structure.

The busbar assembly 124 is means for connecting the battery cells to each other in series and/or in parallel, and includes a busbar frame 124b and a busbar 124c.

The busbar frame 124b is formed as a plate-shaped body to be accommodated in the internal accommodating space of the housing 122.

The sensing line SL communicating with the through-hole 122a formed in the housing 122 is formed on an upper surface of the busbar frame 124b.

The busbar frame 124b may include a plurality of frame slots through which the electrode leads 210 of the battery cells of the cell stack 200 may pass in the longitudinal direction of the module case 100, and may be configured to attach multiple busbars 124c to an outer surface in the same direction as a stacking direction of the battery cells.

For example, the busbar frame may be formed of plastic to provide electrical insulation from the electrode leads.

The multiple busbars 124c are formed in a rod shape made of an electrically conductive material, for example, a metal material such as copper, aluminum, and nickel, and may be arranged in the busbar frame 124b not to interfere with the frame slots.

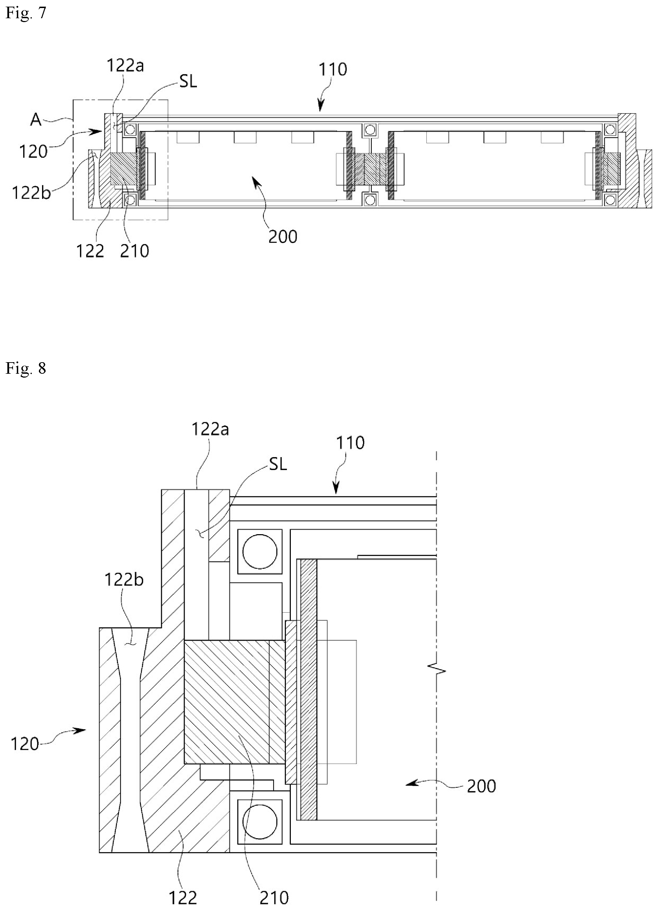

FIG. 7 is a diagram schematically illustrating a vertical cross section of the battery module according to the present disclosure, and FIG. 8 is an enlarged view illustrating a part A in FIG. 7.

The through-hole 122a penetrating upward and downward is formed on the upper surface of the housing 122 of the end cover assembly 120, and the connector 124a is fitted into the through-hole 122a.

The connector 124a formed in this way is configured to transmit and receive information of the battery module M through the sensing line SL formed in the busbar assembly 124 and communicating with the through-hole 122a.

Compared to the battery module in the related art, the present disclosure has an advantage of simplifying the sensing structure by accommodating the busbar assembly 124 having the voltage and current sensing structure in the accommodating space of the housing 122 and directly connecting the electrode lead 210 of the battery cell of the cell stack 200 and the sensing line SL.

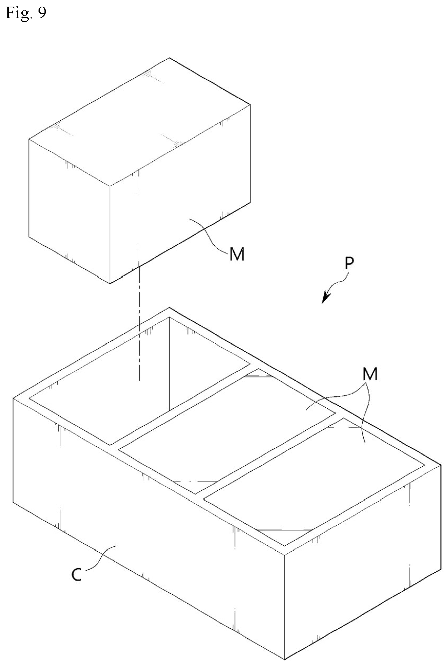

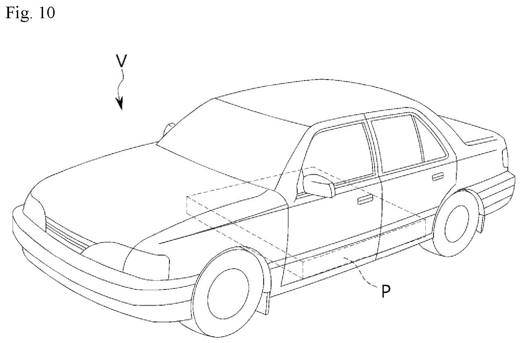

FIG. 9 is a diagram schematically illustrating a configuration of the battery pack according to the present disclosure, and FIG. 10 is a diagram schematically illustrating a vehicle including the battery pack in FIG. 9.

A battery pack P includes the battery module M described above and a pack case C that accommodates a plurality of the battery modules M.

The battery pack P configured in this way may be provided in a vehicle V as a fuel source for the vehicle.

For example, the battery pack P may be provided in the vehicle V as an electric vehicle, a hybrid vehicle, or any other way that may utilize the battery pack P as a fuel source.

In addition, the battery pack P may also be provided in other devices, mechanisms, and facilities, such as an energy storage system that uses a secondary battery, in addition to the vehicle V.

In this way, according to the present disclosure, the battery pack P and the device, the mechanism, and the facility which include the battery pack P such as the vehicle V include the battery module M described above. Therefore, it is possible to realize the battery pack P having all advantages of the battery module M described above, and the device, the mechanism, and the facility which such as the vehicle which include the battery pack P.

## Claims

1. A battery module comprising:
a cell stack in which a plurality of cells are stacked; and
a module case that accommodates the cell stack,
wherein the module case includes a case body having an opening portion, and an end cover assembly coupled to the opening portion of the case body, and the end cover assembly includes a mounting structure for fixing the battery module to a pack case, and a voltage and current sensing structure including a sensing line directly connected to the plurality of cells.

2. The battery module of claim 1, wherein fastening brackets extend along a longitudinal direction are in both end portions of the case body in the longitudinal direction, and the fastening brackets are fastened to the end cover assembly.

3. The battery module of claim 2, wherein the end cover assembly includes a housing having an internal accommodating space and the mounting structure, and a busbar assembly accommodated in the accommodating space of the housing and having the voltage and current sensing structure.

4. The battery module of claim 3, wherein at least one module mounting portion configured to be fixed to the pack case is on an outer surface of the housing.

5. The battery module of claim 4, wherein a pair of the module mounting portions is at a center of a front surface of the housing, and is configured to be fastened with a bolt in a direction perpendicular to a bottom surface of the pack case.

6. The battery module of claim 3, wherein in the housing a bracket mounting portion is at a position corresponding to the fastening bracket.

7. The battery module of claim 6, wherein the bracket mounting portions are respectively on both side surfaces of the housing, and the fastening bracket extends from both end portions of the case body.

8. The battery module of claim 3, wherein a through-hole penetrating upward and downward is on an upper surface of the housing, a connector is in the through-hole, the connector is in the busbar assembly, and the connector is configured to transmit and receive information of the battery module through a sensing line communicating with the through-hole.

9. A battery pack comprising:
the battery module of any one of claims 1 to 8; and
a pack case that accommodates a plurality of the battery modules.

10. A vehicle comprising:
the battery pack of claim 9.
